(19) Europäisches Patentamt
European Patent Office
Office européen des brevets

(11) **EP 1 729 087 A1**

(12) **EUROPEAN PATENT APPLICATION**

(43) Date of publication:
**06.12.2006 Bulletin 2006/49**

(51) Int Cl.:
**G01C 9/00** (2006.01)  **B60T 8/24** (2006.01)

(21) Application number: **06011487.3**

(22) Date of filing: **02.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **02.06.2005 US 144475**

(71) Applicant: **Eaton Corporation**
**Cleveland, Ohio 44114-2584 (US)**

(72) Inventor: **Ameen, Yashwant K.**
**Poway, CA 92064 (US)**

(74) Representative: **Rüger, Barthelt & Abel**
**Patentanwälte**
**Postfach 10 04 61**
**73704 Esslingen a.N. (DE)**

(54) **Real-time determination of grade and superelevation angles of roads**

(57) A novel method 400, apparatus 500, and system 600 are disclosed for estimating a grade angle and superelevation angle of a road upon which a vehicle 103 is traveling, In one embodiment, the present teachings comprise a method 400 for measuring a quantity of specified vehicle associated parameters, including a grade angle composite acceleration parameter, which is used to derive an estimation of a grade angle. Similarly, a superelevation composite acceleration parameter is measured, and subsequently used to derive an estimation of a superelevation angle.

FIGURE 1a

EP 1 729 087 A1

**Description**

**BACKGROUND**

*1. Field*

This disclosure generally relates to methods, apparatuses, articles of manufacture and systems for determining certain vehicle associated parameters on a real time basis, and particularly for determining such parameters relating to road angles upon which a vehicle is traveling.

*2. Related Art*

Computational machines are increasingly being employed processing information collected by sensory devices on-board a vehicle. Vehicle control systems often utilize sensory devices for collecting raw data, transferring the collected data to a computational machine for processing, and then providing control system instructions based upon such processed information to manage one or more systems on-board the vehicle. Such sensory devices include, for example, accelerometers, yaw rate sensors, speedometers, odometers, tachometers, temperature gauges, *etc.*

Information pertaining to grade and superelevation (cross-slope) angles of roads is important for many safety and performance improvement features being introduced in modem road vehicles. Some examples of safety and performance systems include suspension and traction systems in a vehicle, fuel injection control, anti-roll control, cruise control, autoshift, and GPS systems.

Performance of vehicle safety and driving characteristics can be enhanced by accurately collecting sensory information relating to grade and superelevation angles of roads upon which a vehicle is traveling. Limitations associated with the sensory devices used to estimate or measure road grade or superelevation angles must be addressed in order to take advantage of such information.

For example, in one approach, an accelerometer can be used. Acceleration data related to a vehicle includes angular information, which can be extrapolated to determine the vehicle's incline angle or banking angle. If the angular information can be successfully extracted from the acceleration data, road angles can be calculated in a straightforward manner.

Disadvantagcously, on-board accelerometers measure the "total" acceleration of the vehicle. More specifically, accelerometers measure a composite of different accelerations associated with the vehicle, including an acceleration associated with gravity, an acceleration associated with variations in vehicle velocities, and an acceleration associated with centripetal force caused when the vehicle travels along an embarkment. Hence, one limitation of on-board accelerometers is their inherent inability to distinguish between a plurality of accelerations associated with the vehicle.

Because a specifically measured acceleration value must be known (e.g., changing velocities) for a particular kind of acceleration component (*e.g.,* grade angle), it has not yet been possible to determine a particular road angle based upon on-board accelerometer measurements.

The present teachings describe a low-cost and accurate method, apparatus, and system for determining grade and superelevation angles of a road upon which a vehicle is traveling.

SUMMARY

In one embodiment, a method for estimating real-time vehicle associated parameters are disclosed. The method comprises the steps of determining a grade angle and a superelevation angle component.

In determining the grade angle component, an accelerometer is aligned along a first sensing axis that is approximately parallel to a longitudinal axis of a vehicle. A vehicle grade angle composite acceleration parameter is defined wherein the composite parameter comprises a gravity grade angle acceleration component and a vehicle acceleration component. The method separates the two components to determine the grade angle of a road upon which the vehicle travels.

The method then determines a superelevation angle component. An accelerometer is aligned with a second sensing axis that is defined as being approximately parallel to a lateral axis of the vehicle. A vehicle superelevation composite acceleration parameter is defined wherein the superelevation composite parameter comprises at least two components, namely a gravity superelevation component and a centrifugal acceleration component. The method separates the two components to determine the superelevation angle upon which the vehicle travels.

In one embodiment, an apparatus for estimating real-time Vehicle parameters is disclosed. The apparatus includes a first accelerometer aligned approximately parallel to a first sensing axis of a vehicle and a second accelerometer aligned approximately parallel to a second sensing axis of the vehicle. The apparatus further includes at least one electrical communication bus which connects a digital signal processor to the first and second accelerometers. The apparatus also includes a yaw rate sensor which is operatively coupled to the communication bus. The apparatus measures composite acceleration parameters, executes a computer program on the parameters, and derives grade and superelevation angles in real-time.

In one embodiment, a system for simultaneously determining a grade angle and a superelevation angle for a vehicle is disclosed. The system employs a two-axis accelerometer having a first sensing axis and a second sensing axis, wherein the first and second sensing axes are approximately orthogonal. The first sensing axis is aligned with a longitudinal axis of the vehicle, and the second sensing axis is aligned with a lateral (cross) axis of the vehicle. The system also employs a yaw rate sensor and an electrical communication bus. Computations are performed using a digital signal processor, thereby processing real-time information obtained from the accelerometer and the yaw rate sensor to derive the grade angle and the superelevation angle of a road upon which the vehicle is traveling.

## BRIEF DESCRIPTION OF THE DRAWINGS

Embodiments of the present disclosure will be more readily understood by reference to the following figures, in which like reference numbers and designations indicate like elements.

FIGURE 1a illustrates a vehicle traveling on an incline having a grade angle of $\Phi$.

FIGURE 1b illustrates a vehicle as it travels along an embankment having a superelevation angle of $\Phi'$.

FIGURE 1c illustrates a force vector diagram corresponding to the superelevation angle diagram of FIGURE 1b.

FIGURE 2 shows a vehicle having a longitudinal and a vertical axis.

FIGURE 3 shows a top view of a vehicle having a longitudinal and a lateral axis.

FIGURE 4a shows a flow diagram of a method for determining real-time parameters for a vehicle.

FIGURE 4b shows a flow diagram of a method for separating at least two grade angle components of a vehicle grade angle composite acceleration parameter.

FIGURE 4c shows a flow diagram of a method for separating at least two superelevation components of a vehicle superelevation composite acceleration parameter.

FIGURE 5 shows an apparatus for estimating a quantity of real-time vehicle associated parameters.

FIGURE 6 shows a system for simultaneously determining grade and superelevation angles of a vehicle.

## DETAILED DESCRIPTION

*Introduction*

The present teachings disclose a method, apparatus, system and article of manufacture for real-time determination of grade angles and superelevation angles of roads upon which a vehicle is traveling.

The present teachings provide a means for obtaining information pertaining to the grade and superelevation angles of roads with a required degree of accuracy and at reduced cost. Various physical and mathematical relationships between a vehicle, a road, and a plurality of force vectors acting thereupon is now described.

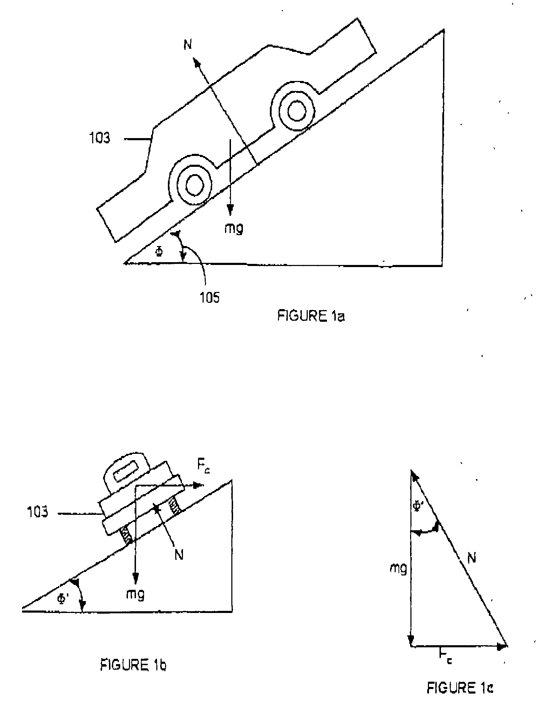

FIGURE 1a illustrates a vehicle 103 traveling uphill on an incline grade having a slope angle $\Phi$. The incline grade exerts a normal force "N" on the vehicle 103, which is approximately orthogonal to the road surface. The vehicle 103 has weight force vector "mg" which acts in a vertically downward direction, as shown in FIGURE 1a.

FIGURE 1b illustrates the vehicle 103 as it travels along an embankment having a superelevation (or "cross-slope") of angle $\Phi'$. The vehicle is shown traveling along a curved road having the superelevation angle $\Phi'$. The embankment exerts a normal force "N" on the vehicle 103, which is approximately orthogonal to the embankment surface. A radial component of the normal force, Fc, is shown in FIGURE 1b. Fc, N, mg, and $\Phi'$ are related as set forth below in Equations 1 and 2.

$$\text{Equation 1:} \quad N * \cos(\Phi') = mg$$

$$\text{Equation 2:} \quad Fc = N * \sin(\Phi') = \sin(\Phi') * (m*g / \cos(\Phi')) = m * g * \tan(\Phi')$$

FIGURE 1c illustrates a force vector diagram corresponding to FIGURE 1b, having the same mathematical relationships as defined in Equations 1 and 2. The force vector diagram shows a force vector triangle having a weight vector "mg", a normal force vector "N", a radial component "Fc" of the normal force, and an angle $\Phi'$, corresponding to the superelevation angle $\Phi'$ of FIGURE 1b.

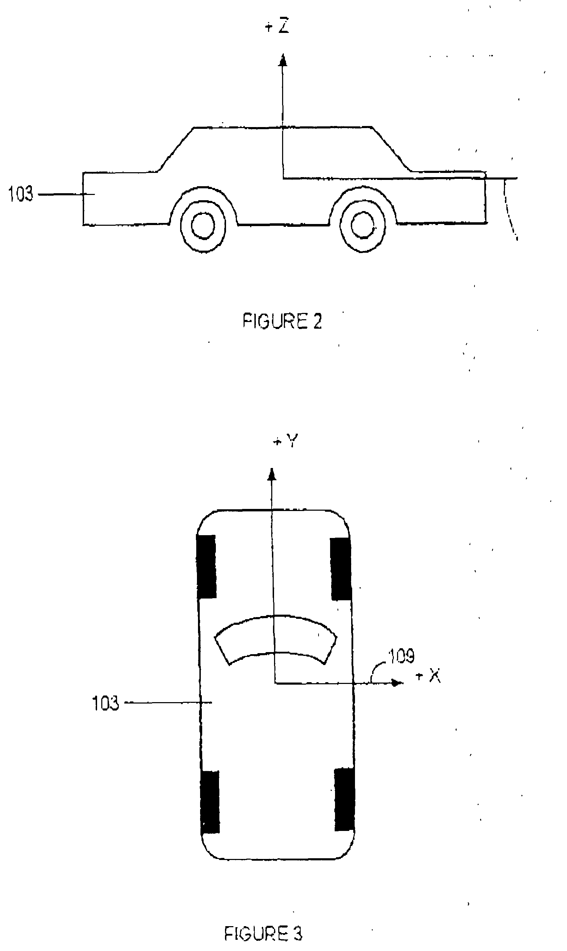

FIGURE 2 illustrates a side view of a vehicle 103. An axis "+Y" is shown, which is parallel to a longitudinal axis of the vehicle 103. An axis "+Z" is also shown, which is parallel to a vertical axis of the vehicle 103.

FIGURE 3 illustrates a top view of a vehicle 103. The vehicle 103 has an axis "+X", parallel with a lateral (cross) axis of the vehicle 103. An axis +Y is also illustrated, which is parallel to a longitudinal axis of the vehicle 103.

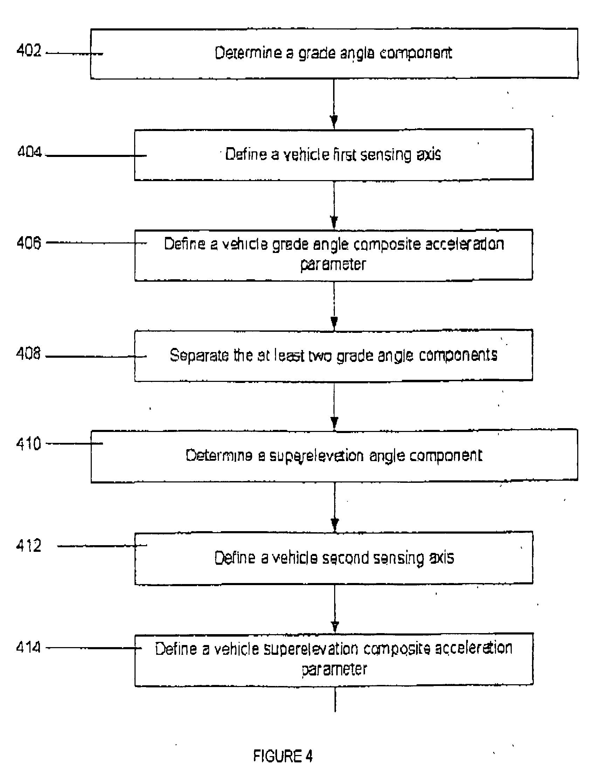

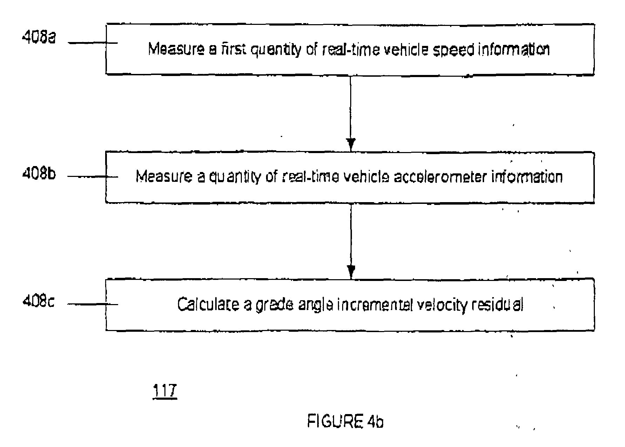

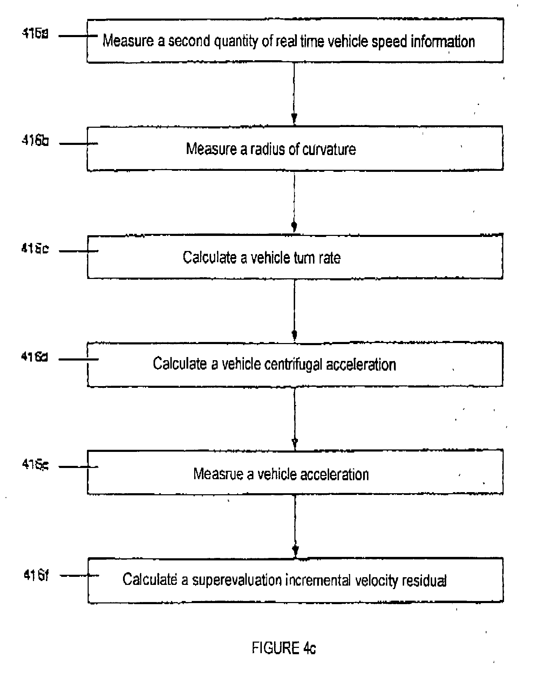

FIGURE 4a illustrates a flow diagram for a method 400 for determining a quantity of real-time parameters of a vehicle. The real-time vehicle parameters include, for example a grade angle and a superelevation angle, as described more fully below. The method 400 determines a grade angle component and a superelevation (cross-slope) angle component for a vehicle traveling on a road.

*Grade Angle*

Referring again to FIGURE 4a, the method 400 begins at a STEP 402 of determining a grade angle component $\Phi$ 105 of a vehicle as it travels on a road (such as illustrated in FIGURE la). In order to determine the grade angle component $\Phi$ 105, the method 400 initially defines a vehicle first sensing axis at a STEP 404, wherein the vehicle first sensing axis is approximately parallel to the longitudinal axis +Y 107, as illustrated in FIGURES 2 and 3. An accelerometer installed on the vehicle is aligned with the longitudinal axis +Y 107.

The method 400 then proceeds to a STEP 406 whereat a vehicle grade angle composite acceleration parameter "$V_{gac}$" is defined. $V_{gac}$ comprises at least two grade angle acceleration components, such as, for example, a gravity grade angle acceleration component "$A_{gga}$", and a grade angle vehicle acceleration component "$A_{ga}$". $V_{gac}$ is defined as set forth in Equation 3 below:

$$\text{Equation 3:} \quad V_{gac} = f(A_{gga}, A_{ga}) \quad \textit{Vehicle grade angle composite acceleration parameter}$$

During STEP 406, the vehicle acceleration is measured using an on-board accelerometer that is aligned with the longitudinal axis of the vehicle. $V_{gac}$ comprises the value measured by the on-board accelerometer, and it comprises the composite acceleration parameter.

The gravity grade angle acceleration component, $A_{gga}$, is due to gravity forces on the vehicle. The vehicle acceleration component $A_{ga}$ comprises the acceleration due to vehicle velocity. The quantity $V_{gac} = f(A_{gga}, A_{ga})$ comprises the acceleration as measured by an on-board accelerometer, This quantity comprises the composite of the two acceleration components described above, In accordance with the present teachings, determination of the grade angle requires separation of the two acceleration components,

Referring again to the method 400 of FIGURE 4a, at a next STEP 408, at least two acceleration components (defined in STEP 406) of the vehicle grade angle composite acceleration parameter $V_{gac}$ are separated. The grade angle vehicle acceleration component $A_{ga}$ is separated from the gravitational grade angle acceleration component $A_{gga}$ in the measured composite acceleration parameter $V_{gac}$. Although a plurality of techniques can be used to separate the at least two acceleration components, one such exemplary embodiment is described below with respect to FIGURE 4b. Such mathematical techniques may be rendered in a computer readable code for implementation in a vehicle control system. Once separated, the gravitational grade angle acceleration component $A_{gga}$ can be used to determine the grade angle of the vehicle using mathematical models of motion, as described more fully below with respect to FIGURE 4b.

*Superelevation Angle*

The method 400 of FIGURE 4a then proceeds to a STEP 410 whereat a superelevation angle component $\Phi'$ of a vehicle is determined. In order to determine the superelevation angle $\Phi'$ of a vehicle (as shown in FIGURES 1b and 1c), the method 400 proceeds to STEP 412 whereat a vehicle second sensing axis is defined. The vehicle second sensing axis is approximately parallel to the lateral axis +X 109 of the vehicle, as illustrated in FIGURE 3. In one embodiment, on-board accelerometer and/or yaw rate sensor is mounted on the vehicle and aligned with the lateral +X axis 109 of the vehicle 103.

When a vehicle is traveling on a superelevated curved road (*i.e.,* a banked road). It is difficult for an on-board accelerometer to distinguish between acceleration caused by gravity and that caused by the centrifugal acceleration experienced by the vehicle. The on-board accelerometer will therefore typically measure both acceleration components as a vehicle superelevation composite parameter.

The method 400 then proceeds to a STEP 414 whereat the method defines a vehicle superelevation composite acceleration parameter "$V_{sec}$". At least two superelevation components comprise the vehicle superelevation composite acceleration parameter $V_{sec}$, namely, a gravitational superelevation component "$A_{gsc}$", and a centrifugal acceleration component "$A_c$". These components are defined as set forth in Equation 4 below:

**Equation 4:** $V_{sec} = f(A_{gse}, A_c)$ *Vehicle superelevation angle composite acceleration parameter*

$V_{sec}$ is measured using an on-board accelerometer aligned with the lateral, X axis of the vehicle (as shown in FIGURE 3).

The method 400 of FIGURE 4a proceeds to STEP 416 whereat the gravity superelevation component $A_{gsc}$ and the centrifugal acceleration component $A_c$ are separated and distinguished. More specifically, at STEP 416, the measured vehicle superelevation composite acceleration parameter $V_{sec}$ is separated into the gravitational superelevation component $A_{gsc}$ and the centrifugal acceleration component $A_c$. Although a plurality of techniques for separating these two superelevation components may be implemented and fall within the scope of the present disclosure, one such exemplary embodiment is described more fully below with respect to FIGURE 4c. Such methods may be implemented, for example, in a computer readable code for implementation in a vehicle control system,

In one embodiment an apparatus is disclosed wherein the apparatus comprises the method 400 implemented in a digital computer system programmed to perform the processes illustrated in FIGURES 4a-4c.

*Separating Grade Angle Components*

Referring now to FIGURE 4b, a flow chart of a method 117 for separating at least two grade angle components of a vehicle grade angle composite acceleration parameter is illustrated. Method 117 comprises one exemplary embodiment of the STEP 408 described above with respect to FIGURE 4a.

As described above with respect to Equation 3, when a vehicle is in motion, an on-board accelerometer can be used to measure the vehicle grade angle composite acceleration parameter $V_{gac}$. The vehicle grade angle composite acceleration parameter $V_{gac}$ comprises at least two grade angle components, such as, for example, a gravitational grade angle acceleration component $A_{gga}$, and a grade angle vehicle acceleration component $A_{gs}$.

As described above, acceleration caused by gravity above are not easily distinguished from vehicular acceleration (*i.e.,* changing vehicular velocities) simply using an accelerometer measurement. By estimating vehicular acceleration using an independent means, the gravity component can be separated out from the acceleration measurement provided by an on-board accelerometer and real time determination of the grade angle can be made.

Referring again to FIGURE 4b, the method 117 begins at a STEP 408 whereat a first quantity of real-time vehicle speed (*i.e.,* velocity) information "|V|" is measured over a first predetermined time period. In one embodiment, the speed information is measured using a vehicle speedometer. In another embodiment, the speed information is obtained by differentiating an odometer reading.

The method 117 then proceeds to a STEP 408b whereat a quantity of real-time vehicle accelerometer information is measured over the first predetermined time period. In one exemplary embodiment, this information is stored in a computer readable memory. In one embodiment, the accelerometer information is measured using an accelerometer that is mounted on the vehicle. In another embodiment, acceleration information is calculated by first determining the velocity of the vehicle, and then differentiating the vehicle velocity with respect to time.

Finally, the method 117 proceeds to a STEP 408 whereat a grade angle incremental velocity residual ("I.V.R") is calculated. The components of the measured acceleration composite parameter $V_{gac}$ are thereby separated. Separation of the components of the acceleration composite parameter $V_{gac}$ can be achieved at either an acceleration level or at a velocity level.

Incremental integration of the accelerometer output occurs naturally when its digitized output is accumulated over a prescribed time period. It is relatively straightforward to obtain corresponding vehicle speed variations from the speed and/or distance traveled, available over the same time intervals. The grade angle incremental velocity residual is obtained by subtracting the vehicle velocity variations over the prescribed time periods from the incremental accelerometer outputs (also over the prescribed time periods).

In one exemplary embodiment, if data separation is processed at an acceleration level, the vehicle velocity information measured at STEP 408a must be differentiated once, over the first predetermined time period "$\Delta t$", and then subtracted from the accelerometer measurement obtained during the above STEP 408b. The difference between the differentiated vehicle velocity information and the accelerometer measurement comprises the "(I.V.R.)/$\Delta t$". Manipulation of the I.V.R. is described more fully below. Odometer measurements may be differentiated twice with respect to time to extract similar information.

In one exemplary embodiment, if data separation is processed at a velocity level, a velocity magnitude "|V|" may be directly obtained from a speedometer, such as during the STEP 408a, over the first predetermined time period, and subtracted from an integrated accelerometer measurement $V_{gac}$ over the first predetermined time period thereby yielding the grade angle incremental velocity residual value, or "I.V.R". This is shown in Equation 5 below.

$$\text{Equation 5:} \quad \int V_{gac}\, dt - |V| = I.V.R.$$

The I.V.R. comprises the component of the integrated value of $V_{gac}$. The I.V.R. is due to the incremental integration of the prevalent component of earth's gravity. Using a calculated value of I.V.R., the grade angle can be computed. The equations used to compute the grade angle depends on whether a small angle approximation or a large angle approximation is used.

For example, in one embodiment, for small angles (e.g., less than ten degrees) Equation 6 may be used to compute the grade angle;

$$\text{Equation 6:} \quad g * \sin(\Phi) * \Delta t \simeq g * \Phi * \Delta t$$

In the small angle approximation, because a calculated value for I.V.R. is wholly ascribed to the prevalent component of earth's gravity, I.V.R. is set equal to the known value of earth's gravity, and is multiplied by the grade angle $\Phi$, as shown below in Equation 7a:

$$\text{Equation 7a:} \quad g * \Phi * \Delta t = I.V.R.$$

Next, both sides of Equation 7a is divided by gravity, and a real-time incremental estimate of the grade angle is computed, as shown in Equation 7b below. In practice, as a vehicle travels along a grade, the grade angle may vary. To account for such variations, the time period over which the accelerometer and speedometer measurements are taken can be varied to conform to the requirements of specific applications (*e.g.,* roll-over prevention, cruise control). Equation 7b is set forth below:

$$\text{Equation 7b:} \quad \Phi = (I.V.R.) / (g * \Delta t)$$

Hence, for small road angles, the grade angle can be estimated by solving for $\Phi$ in Equation 7b. The accuracy of instantaneous grade angle depends, *inter alia,* on the time periods at which the velocity and acceleration measurements are measured.

In one exemplary embodiment, wherein a road angle is greater than ten degrees, Equation 7c, set forth below, is used to estimate the grade angle.

$$\text{Equation 7c:} \quad \Phi = \arcsin\left[(I.V.R.) / (g * \Delta t)\right]$$

In some embodiments, Equation 7c may be used to calculate grade angles for literally any grade angle, including small grade angles. As such, Equation 7c comprises a more encompassing formula for use in determining grade angles. However, for ease of calculation, the above described small angle approximation may be used. In some embodiments, appropriate data smoothing and filtering is required at every stage of the grade angle determination process.

*Separating Superelevation Angle Components*

FIGURE 4c shows a flow chart of a method for separating at least two superelevation components. The method 123 corresponds to the STEP 416 described above with reference to the method 400 of FIGURE 4e. As described above, as a vehicle travels on a superelevated (banked) road, it is very difficult for an on-board accelerometer to distinguish between the centrifugal acceleration $A_c$ experienced by the vehicle and the acceleration of the vehicle caused by gravity.

The on-board accelerometer measures a composite of both types of acceleration. The gravity component of acceleration can be separated from the total acceleration measured by the accelerometer by estimating the centrifugal component $A_c$.

Referring again to FIGURE 4c, the method 123 begins at a STEP 416a by measuring a second quantity of real-time vehicle velocity or speed information, "V", over a second predetermined time period. In some embodiments, the second quantity of real-time vehicle speed information is identical to the measured first quantity of real-time vehicle speed information described above. However, in other embodiments, the quantities shall differ.

The method 123 then proceeds to a STEP 416b, whereat a radius of curvature "R" through which the vehicle 103 is accelerating is measured. Several methods of measuring the radius of curvature are well-known and are not described further herein.

The method then proceeds to a STEP 416c, whereat the vehicle turn rate is measured over the second predetermined time period. Methods of measuring the vehicle turn rate are also well-known, such as, for example, employing a yaw rate sensor on-board the vehicle, and therefore are not described further herein.

The centrifugal acceleration "$A_c$" of the vehicle is calculated at STEP 416d. Calculation of the vehicle centrifugal acceleration $A_c$ can be implemented in accordance with Equation 8 set forth below, employing the vehicle speed information, "V", measured in STEP 416a, the radius of curvature "R" measurement of STEP 416b, and the vehicle turn rate "$\omega$" calculated in STEP 416c. Equation 8 is set forth below:

$$\text{Equation 8:} \quad A_c = V^2 / R = \omega^2 * R = \omega * V$$

Referring again to FIGURE 4c, the method 123 then proceeds to a STEP 416e whereat a composite vehicle acceleration, "$V_{sec}$", is measured. As noted above, $V_{sec}$ comprises a measured composite acceleration parameter, including a centrifugal acceleration component "$A_c$", and a gravity superelevation component "$A_{gse}$", as set forth above in Equation 4. In one exemplary embodiment, $V_{sec}$ is measured using an on-board accelerometer aligned with a lateral "X" axis of the vehicle.

The method 123 then proceeds to a STEP 416f, whereat a superelevation incremental velocity residual (S.E.I.V.R.) is calculated. In one exemplary embodiment, the method begins with the mathematical relationship in Equation 4 described above, and employs Equation 9a set forth below, to implement the calculations in STEP 416f.

$$\text{Equation 9a:} \quad V_{sec} = f(A_{gse}, A_c) = A_c + A_{gse}$$

Subtracting the centrifugal acceleration component from both sides of Equation 9a yields Equation 9b below.

$$\text{Equation 9b:} \quad V_{sec} - A_c = A_{gse}$$

As $A_c$ can be calculated from the mathematical relationships between the measured quantities in Equation 8, and $V_{sec}$ is measured from the on-board accelerometer output, the left side of Equation 9b remains constant. Integrating Equation 9b over the second time period yields Equation 9c set forth below.

$$\text{Equation 9c:} \quad \int (V_{sec} - A_c)\, dt = \int A_{gse}\, dt$$

The left side of Equation 9c comprises the superelevation incremental velocity residual ("S.E.I.V.R."). The S.E.I.V.R. is calculated by subtracting the centrifugal acceleration of the vehicle, $A_c$, from the on-board accelerometer output measurement, $V_{sec}$, and then integrating the difference over time to yield an incremental velocity due to an integrated gravity component. The S.E.I.V.R. is calculated so that the superelevation angle of the vehicle can be subsequently calculated by separating out an angular component, as will be described below. For small embankment angles (e.g., less than ten degrees), the right side of Equation 9c is approximately equal to gravity multiplied by the superelevation angle $\Phi'$ (small angle approximation $\rightarrow \sin(\Phi) = \Phi$), as noted in Equation 9d set forth below.

$$\text{Equation 9d: } \int A_{gse} \, dt = \int g * \Phi' \, dt$$

Hence, substituting the S.E.I.V.R. into Equation 9c for the left side, and further substituting Equation 9d into Equation 9c, for the right side, results in the derivation of Equation 9e set forth below.

$$\text{Equation 9e: S.E.I.V.R.} = g * \Phi' * \Delta t$$

Dividing both sides of Equation 9e by gravity, yields Equation 9f set froth below, which is an estimate of the superelevation angle.

$$\text{Equation 9f: } (S.E.I.V.R.) / (g * \Delta t) = \Phi'$$

Also, for any angle, small or large, Equation 9g may be employed to calculate the superelevation angle.

$$\text{Equation 9g: } \arcsin\left[ (S.E.I.V.R.) / (g * \Delta t) \right] = \Phi'$$

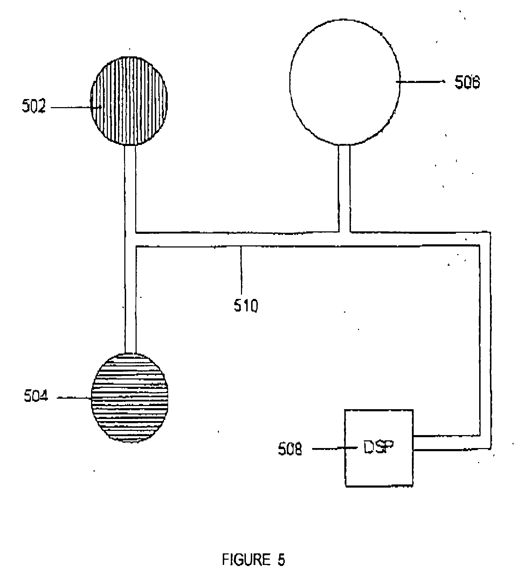

FIGURE 5 shows an apparatus 500 for estimating a quantity of real-time vehicle parameters. In one exemplary embodiment, the apparatus 500 comprises a first accelerometer 502, having a first sensing axis approximately parallel to a longitudinal axis of a vehicle. In one embodiment, the longitudinal axis is parallel to a length of the vehicle. The first accelerometer 502 measures a vehicle acceleration composite parameter of a grade angle. The apparatus 500 also comprises at least one electrical communication bus 510 operatively connected to the first accelerometer 502. The bus 510 is also operatively connected to a digital signal processor 508. In one embodiment, the at least one electrical communication bus 510 comprises a wireless communications system. The vehicle's odometer, and/or speed, and/or acceleration information is on the at least one electrical communication bus 510. In one embodiment, the vehicle's odometer, and/or speed, and/or acceleration information is directly obtained from the vehicle's odometer, speedometer, and/or accelerometer, respectively.

A second accelerometer 504, having a second sensing axis, wherein the second sensing axis is approximately parallel to a lateral (cross) axis of the vehicle. In one embodiment, the lateral axis 109 is parallel to a width of the vehicle. The second accelerometer 504 is operatively connected to the at least one electrical communication bus 510. Also, the second accelerometer 504 is operatively connected to the digital signal processor 508 via the at least one electrical communication bus 510. The second accelerometer 504 is adapted to measure a superelevation (cross-slope) composite acceleration parameter. The superelevation composite acceleration parameter is an acceleration measurement composed of the acceleration due to the vehicle and the acceleration due to gravity. A yaw rate sensor 506 may be operatively coupled to the at least one electrical communication bus 510.

The digital signal processor 508 of FIGURE 5 is adapted to process information gathered by the first accelerometer 502 and compute a grade angle estimation, employing the methods described above. Similarly, the digital signal processor 508 is further adapted to process information obtained by both the second accelerometer 504, and the yaw rate sensor 506 to compute a superelevation angle estimation, also employing the methods described above.

The apparatus 500 functions to measure composite acceleration parameters, execute a computer program in order to process the measured composite parameters, thereby deriving grade angle and superelevation angles on a real-time basis.

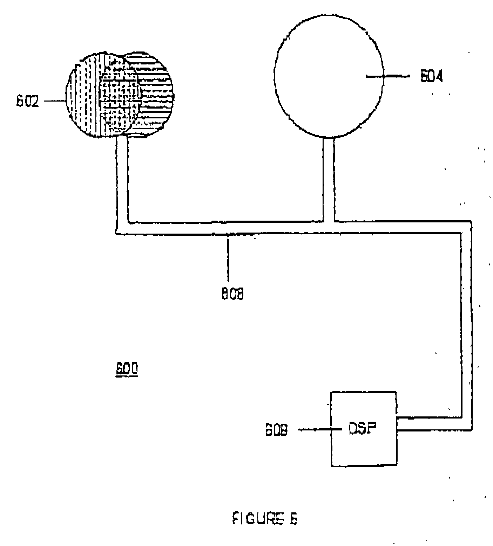

FIGURE 6 shows a system 600 for simultaneously determining grade and superelevation angles of a vehicle. A two-axis accelerometer 602, is operatively connected to an electrical communication bus 606. In one embodiment, the two-axis accelerometer is a device which simultaneously measures acceleration along two different axes, The two-axis accelerometer 602 has a first axis associated therewith, wherein the first axis is approximately orthogonal to the second sensing axis. In some embodiments, the first sensing axis is approximately aligned with a longitudinal vehicle axis, and the second sensing axis is approximately aligned with a lateral vehicle axis. That is, the first sensing axis is aligned with a length of the vehicle, and the second sensing axis is aligned with a width of the vehicle.

The two-axis accelerometer 602 is operatively coupled to a digital signal processor 608 via the electrical communication bus 606. A yaw rate sensor 604 is operatively coupled to the digital signal processor 608 via the electrical communication bus 606. The two-axis accelerometer 602 measures acceleration along both the longitudinal vehicle axis and along the lateral vehicle axis. The vehicle's odometer, and/or speed, and/or acceleration information is on the electrical communication bus 606, In one embodiment, the vehicle's odometer, and/or speed, and/or acceleration information is directly obtained from the vehicle's odometer, speedometer, and/or accelerometer, respectively. In one embodiment, the electrical communication bus 606 comprises a wireless communications system. The digital signal processor 608 is adapted to calculate a grade angle and a superelevation estimate, employing the methods described above.

Those skilled in the vehicle safety systems and control systems art will appreciate that the present teachings may be practiced with other computer system configurations, including hand-held devices, multiprocessor systems, microprocessor-based or programmable consumer electronics, network PC's, minicomputers, mainframe computers, and the like. The present teachings may also be practiced in distributed computing environments where tasks are performed by remote processing devices that are linked through a communications network. In a distributed computing environment, program modules may be located in both local and remote memory storage devices.

The computer described herein above may operate in a networked environment using logical connections to one or more remote computers. These logical connections can be achieved using a communication device that is coupled to or be a part of the computer; the present teachings are not limited to a particular type of communications device. The remote computer may be another computer, a server, a router, a network PC, a client, a peer device or other common network node, and typically includes many or all of the elements described above relative to the computer. The logical connections include a local-area network (LAN) and a wide-area network (WAN). Such networking environments are commonplace in office networks, enterprise-wide computer networks, intranets and the Internet, which are all types of networks.

When used in a LAN-networking environment, the computer is connected to the local network through a network interface or adapter, which is one type of communications device. When used in a WAN-networking environment, the computer typically includes a modem, a type of communications device, or any other type of communications device for establishing communications over the wide area network, such as the Internet.

The foregoing description illustrates exemplary implementations, and novel features, of aspects of an apparatus for calculating grade angle and superelevation angles of a road upon which a vehicle is traveling. Alternative implementations are suggested, but it is impractical to list all alternative implementations of the present teachings. Therefore, the scope of the presented disclosure should be determined only by reference to the appended claims, and should not be limited by features illustrated in the foregoing description except insofar as such limitation is recited in an appended claim.

While the above description has pointed out novel features of the present disclosure as applied to various embodiments, the skilled person will understand that various omissions, substitutions, permutations, and changes in the form and details of the present teachings illustrated may be made without departing from the scope of the present teachings.

Each practical and novel combination of the elements and alternatives described hereinabove, and each practical combination of equivalents to such elements, is contemplated as an embodiment of the present teachings. Because many more element combinations are contemplated as embodiments of the present teachings than can reasonably be explicitly enumerated herein, the scope of the present teachings is properly defined by the appended claims rather than by the foregoing description. All variations coming within the meaning and range of equivalency of the various claim elements are embraced within the scope of the corresponding claim. Each claim set forth below is intended to encompass any apparatus or method that differs only insubstantially from the literal language of such claim, as long as such apparatus or method is not, in fact, an embodiment of the prior art, To this end, each described element in each claim should be construed as broadly as possible, and moreover should be understood to encompass any equivalent to such element insofar as possible without also encompassing the prior art. Furthermore, to the extent that the term "includes" is used in either the detailed description or the claims, such term is intended to be inclusive in a manner similar to the term "comprising".

**Claims**

1. A method 400 for determining real-time parameters for a vehicle 103, comprising:

    a) determining a grade angle component 105, comprising:

        i) defining a vehicle first sensing axis that is approximately parallel to a longitudinal axis 107 of the vehicle 103;
        ii) defining a vehicle grade angle composite acceleration parameter, wherein the vehicle grade angle composite acceleration parameter comprises at least two grade angle components, including a gravity grade angle acceleration component and a grade angle vehicle acceleration component; and

iii) separating the gravity grade angle acceleration component from the grade angle vehicle acceleration component; and

b) determining a superelevation angle component, comprising:

i) defining a vehicle second sensing axis that is approximately parallel to a lateral axis 109 of the vehicle 103;
ii) defining a vehicle superelevation composite acceleration parameter, wherein the vehicle superelevation composite acceleration parameter comprises at least two superelevation components, including a gravity superelevation component and a centrifugal acceleration component; and
iii) separating the gravity superelevation component from the centrifugal acceleration component.

2.  The method 400 of Claim 1, wherein step of separating the gravity grade angle acceleration component from the grade angle vehicle acceleration component comprises:

a) measuring real-time vehicle velocity over a first predetermined time period;
b) measuring real-time vehicle accelerometer information over the first predetermined time period; and
c) calculating a grade angle incremental velocity residual.

3.  The method of Claim 1, wherein step of separating the gravitational superelevation component from the centrifugal acceleration component comprises:

a) measuring real-time vehicle velocity information over a second predetermined time period;
b) measuring a radius of curvature through which the vehicle 103 is accelerating;
c) calculating a vehicle turn rate over the second predetermined time period;
d) calculating a vehicle centrifugal acceleration based at least in part on the radius of curvature measured in step (b), the real-time vehicle velocity information measured in step (a), and the vehicle turn rate calculated in step (c);
e) measuring a vehicle acceleration; and
f) calculating a superelevation incremental velocity residual.

4.  The method of Claim 2, wherein the step (c) of calculating the grade angle incremental velocity residual comprises:

a) integrating the real-time vehicle accelerometer information incrementally and;
b) subtracting the real-time vehicle velocity from the incrementally integrated real-time vehicle acceleration information, thereby defining a grade angle incremental velocity residual.

5.  The method of Claim 3, wherein the step (f) of calculating a superelevation incremental velocity residual comprises:

a) subtracting the vehicle centrifugal acceleration calculated in step (d) from the vehicle acceleration measured in step (e), thereby defining an acceleration component due to gravity; and
b) integrating the acceleration component due to gravity over the second predetermined time period thereby defining the superelevation incremental velocity residual.

6.  The method of Claim 3, wherein the step (f) of calculating a superelevation incremental velocity residual comprises:

a) integrating the vehicle centrifugal acceleration over the second predetermined time period;
b) measuring a vehicle velocity; and
c) subtracting the integrated vehicle centrifugal acceleration of step (a) from the velocity measured in step (b), thereby defining a superelevation incremental velocity residual.

7.  An apparatus 500 estimating real-time data associated with a vehicle 103, comprising:

a) a first accelerometer 502 having a first sensing axis that is aligned approximately parallel to a longitudinal axis 107 of a vehicle 103;
b) at least one electrical communication bus 510 operatively coupled to the first accelerometer 502;
c) a digital signal processor 508 operatively coupled to the at least one electrical communication bus 510;

d) a second accelerometer 504 having a second sensing axis that is aligned approximately parallel to a lateral axis 109 of the vehicle 103, wherein the second accelerometer 504 is operatively connected to the at least one electrical communication bus 510; and

e) a yaw rate sensor 506 operatively coupled to the at least one electrical communication bus 510.

8. The apparatus 500 set forth in Claim 7, wherein the at least one electrical communication bus 510 comprises a wireless communication system.

9. A system 600 simultaneously determining a grade angle and a superelevation angle of a vehicle 103, comprising:

a) a two-axis accelerometer 602 having a first sensing axis and a second sensing axis, wherein the first sensing axis is approximately orthogonal to the second sensing axis, and wherein the first sensing axis is aligned approximately with a vehicle longitudinal vehicle axis 107, and wherein the second sensing axis is aligned approximately with a vehicle lateral vehicle axis 109;

b) an electrical communication bus 606 operatively coupled to the two-axis accelerometer;

c) a yaw-rate sensor 604 operatively coupled to the electrical communication bus 606; and

d) a digital signal processor 608 operatively coupled to the electrical communication bus 606, wherein the digital signal processor 608 calculates a grade angle and a superelevation estimate of a road upon which the vehicle 103 is traveling.

10. The system 600 of Claim 9, wherein the electrical communication bus 606 comprises a wireless communication system.

FIGURE 1a

FIGURE 1b

FIGURE 1c

+ Z

103

FIGURE 2

+ Y

109

103

+ X

FIGURE 3

402 — Determine a grade angle component

404 — Define a vehicle first sensing axis

406 — Define a vehicle grade angle composite acceleration parameter

408 — Separate the at least two grade angle components

410 — Determine a superelevation angle component

412 — Define a vehicle second sensing axis

414 — Define a vehicle superelevation composite acceleration parameter

FIGURE 4

408a — Measure a first quantity of real-time vehicle speed information

408b — Measure a quantity of real-time vehicle accelerometer information

408c — Calculate a grade angle incremental velocity residual

117

FIGURE 4b

416a — Measure a second quantity of real time vehicle speed information

416b — Measure a radius of curvature

416c — Calculate a vehicle turn rate

416d — Calculate a vehicle centrifugal acceleration

416e — Measrue a vehicle acceleration

416f — Calculate a superevaluation incremental velocity residual

FIGURE 4c

502

506

510

504

508 — DSP

FIGURE 5

602

604

606

600

608

DSP

FIGURE 6

European Patent
Office

**EUROPEAN SEARCH REPORT**

Application Number

EP 06 01 1487

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/085950 A1 (ALTENKIRCH MANFRED) 21 April 2005 (2005-04-21) * paragraphs [0014] - [0019], [0036] * | 1-6 | INV. G01C9/00 B60T8/24 |
| A | | 7-10 | |
| X | US 2003/236606 A1 (LU JIANBO ET AL) 25 December 2003 (2003-12-25) * paragraphs [0023], [0031] * | 7-10 | |
| A | | 1-6 | |
| A | US 5 446 658 A (PASTOR ET AL) 29 August 1995 (1995-08-29) * column 1, line 21 - column 2, line 7 * | 1-10 | |
| A | DE 102 48 432 A1 (ROBERT BOSCH GMBH) 29 April 2004 (2004-04-29) * abstract * | 1-10 | |
| A | DE 198 21 617 C1 (DAIMLERCHRYSLER AG) 30 September 1999 (1999-09-30) * abstract * | 1-10 | TECHNICAL FIELDS SEARCHED (IPC) G01C B60T |

The present search report has been drawn up for all claims

| Place of search | Date of completion of the search | Examiner |
|---|---|---|
| The Hague | 4 October 2006 | de Bakker, Michiel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 06 01 1487

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2006

| Patent document cited in search report | | Publication date | Patent family member(s) | | Publication date |
|---|---|---|---|---|---|
| US 2005085950 | A1 | 21-04-2005 | DE | 10154341 A1 | 15-05-2003 |
| | | | WO | 03040652 A1 | 15-05-2003 |
| | | | EP | 1444483 A1 | 11-08-2004 |
| US 2003236606 | A1 | 25-12-2003 | DE | 10327591 A1 | 15-01-2004 |
| | | | GB | 2389828 A | 24-12-2003 |
| US 5446658 | A | 29-08-1995 | DE | 69513232 D1 | 16-12-1999 |
| | | | DE | 69513232 T2 | 02-03-2000 |
| | | | EP | 0689116 A2 | 27-12-1995 |
| DE 10248432 | A1 | 29-04-2004 | NONE | | |
| DE 19821617 | C1 | 30-09-1999 | EP | 0957339 A2 | 17-11-1999 |
| | | | JP | 2000065563 A | 03-03-2000 |
| | | | US | 6332353 B1 | 25-12-2001 |
| | | | US | 2002002859 A1 | 10-01-2002 |

EPO FORM P0459

For more details about this annex : see Official Journal of the European Patent Office, No. 12/82